# EUROPEAN PATENT SPECIFICATION

(11) **EP 0 556 529 B1**
(45) Date of publication and mention of the grant of the patent: **22.07.1998**
(21) Application number: 92500153.9
(22) Date of filing: 20.11.1992
(51) Int. Cl.: F16K 31/06

(54) **Submersible and unblockable electromagnetic valve**
Tauchbares und unsperrbares elektro-magnetisches Ventil
Vanne électromagnétique submersible et inblocable

(30) Priority: 28.11.1991 ES 9102666; 04.06.1992 ES 9201163
(43) Date of publication of application: 25.08.1993
(73) Proprietor: Llorente-Burgueno, Maria de los Angeles, E-28033 Madrid (ES)
(72) Inventor: Llorente-Burgueno, Maria de los Angeles, E-28033 Madrid (ES)

(56) References cited:
- DE-A- 1 288 857
- DE-A- 2 925 474
- REGELUNGSTECHNIK vol. 7, no. 11, 1963, MUNCHEN page 312 WEISHEIT &WERNER 'Elektromagnetische kontinuierlich stellbare Regelventile'

## Description

### Technical field

The object of this invention is a submersible and unblockable valve according to preamble of claim 1, which, through a computer, controls the movement of water and the raising and falling from the ejecting nozzles of ornamental fountains. A valve according to preamble of claim 1 is known from DE-A-2 925 474.

### Background

In the technologically most advanced fountains, where groups of aquatic elements, light and colour are harmoniously synchronized to music, the movement of water, that is to say, its raising and falling from the nozzles is controlled through specific valves. A computer program controls and integrates the movement of water, chromatic light and music.

These valves are usually either pneumatic or electromagnetic, the latter type being considered more advanced from the technological point of view.

It is more and more common to coordinate the plays of water with effects of colour and musical melodies to achieve a spectacle of water, colour and music with a harmonious unified sense. The valve must have a high *response speed* (it must be able to open and close very quickly to control the ejection of water) to synchronize the dynamics of water with the dynamics of the musical melody in a very short time. The quality of the aquatic elements of the fountain depends on the response capacity of this valve, which permits coordination of the movement of water with the rhythm of music.

The show is based on the water-colour-music interaction and the quality of this interaction depends on the performance of a great number of valves. In order to achieve the desired quality of such a show all the valves should work properly, that is to say, none of them must be obstructed because of particles in suspension or dirty water. Such failures would be immediately considered as defects and the more perfected and coordinated the interaction, the more evident such defects will be.

Keeping water clean in the basins of ornamental fountains is a difficult aim, given the many factors that may dirty the water such as garbage thrown by people, the falling of leaves or pollen from nearby trees, and so on. By using filters and decalcification equipment we can achieve a satisfactory degree of cleaning. Nevertheless, the cost of the filters and the decalcification equipments is high, and in the case of small and medium ornamental fountains, prohibitively expensive.

With the filters it is hard to make sure there are no particles in suspension. They can get into the electrovalve and block it, especially if there are small, sandy particles that can get between two pieces (cylindrical or of any other kind) causing them to jam.

Consequently, the conditioning factors that measure the quality of a valve of this kind in accordance to the requirements of functionality of ornamental fountains are: the response speed and its capacity to work in dirty or hard water, such as calcareous or sea water.

The electromagnetic valves that have been used in fountains so far comply satisfactorily with the condition of providing the necesary response speed for very limited flows of water. The power of the electromagnet required for big water flows has a lot of influence on the cost of the valve.

Moreover, the result of the long distance between the movable magnetic core and the fixed magnetic core -necessary to achieve a distance between the plug and the hole permitting a big water flow- is a lower speed of the valve.

On the other hand, the opening and closing of the valve has been achieved through continuous movements of the plug, that is to say, the possibility of a controllable sequence of different positions has not been considered.

As a consequence, in trials to achieve effects of "water explosions" in different heights -a very interesting effect from the aesthetic point of view in this kind of fountains-, it was necessary to assign two valves to every jet, which implies much higher costs.

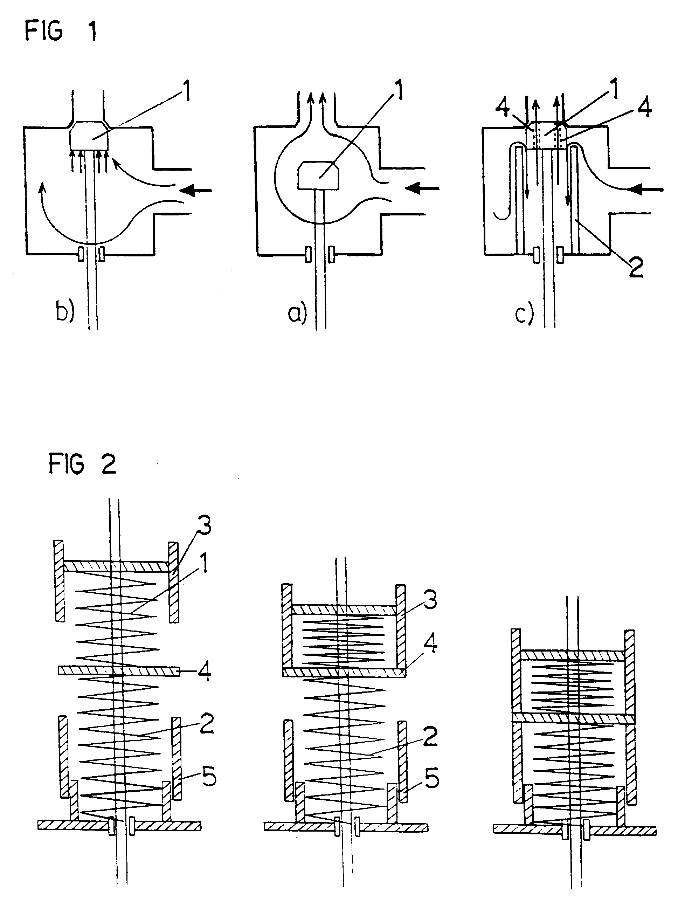

Another obstacle for the response speed in low water flow is the fact that the opening of the valve (Fig. 1) (from a) to b)) requires the electromagnet to overcome the water pressure inside the valve (pressure often reaching about 3 or 4 atm.). Such positioning would require the use of very large and powerful electromagnets.

To avoid the use of oversized electromagnets, one of the most remarkable and widely used techniques is putting the plug in a cylinder where the effect of water pressure is reduced to the level of atmospheric pressure.

This involves (Fig. 1c) the creation of a small space around the edge of the plug (Fig. 1, 1) with regard to the cylinder (Fig. 1, 2) permitting the access of water into the cylinder. When the water is connected to the outside via orifices (4), the pressure to be overcome to open is reduced to atmospheric pressure. This implies that the valve is not perfectly watertight when it closes, but only on very rare occasions, would this be a deterrent to proper functioning of the ornamental fountain.

But small spaces allow small sandy particles to be jammed by friction, since during the filtration process it is hard to guarantee there are no small particles floating in the water. In the case of calcareous water, this will always be a negative effect unless we install a decalcification equipment.

In short, as for the aesthetic quality of water plays (the raison d'être of the valves) achieved through the solutions known currently, the response speed to achieve big water flows is not satisfactory, so in order to achieve the dynamic effect of explosions of jets in different heights, it is necessary to install two valves or more valves for every jet.

Maintenance in dirty or calcareous water is a problem. In such water, the maintenance of the valves requires a meticulous work of unblocking and cleaning, which often implies disassembling them.

### SOLUTION:

The valve according to the invention and its preferred embodiments has the following advantages:
- The possibility of achieving, with a great response speed, even with big water flows, a controllable sequence of opening and closing positions, through the action of an electromagnet, activated by using different levels of electric tension and their corresponding reactions through a system of coil springs.
- The adequacy of the valve to work in dirty water, just with the usual pump filters, which avoid the entrance of particles longer than the opening of the valve and, in case of a blockage by lime, the possibility of unblocking the valve manually from outside, without disassembling it at all.

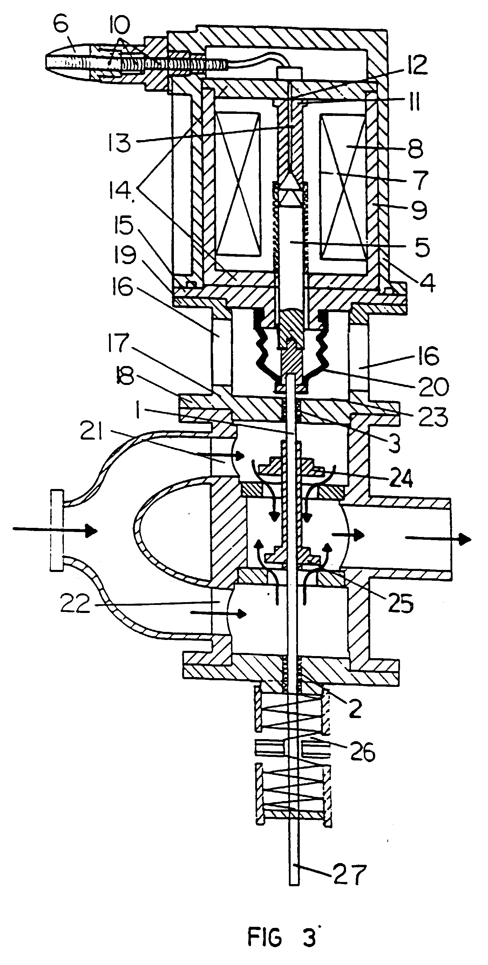

In order to achieve a controllable sequence of different opening positions keeping a high response speed, even with suitable valves for big flows, it is necesary to reduce water pressure (the power of the electromagnet is established according to the water pressure) by means of an opening and closing system of opposing plugs (Fig. 3, 24 and 25) achieving an effect of balance of forces on water pressure.

This principle of taking advantage of water pressure has been very rarely used in the design of valves, probably because of the difficulties in achieving a hermetic closing to the passage of liquids (due to the difficulties to mechanize a total closing where four surfaces are in contact).

In our case it is possible to enjoy the advantages of this principle, since it is not necessary to achieve a hermetic closing (which is almost an inherent condition to the concept of valve). In this case it is not only unnecessary. The opposite condition is necessary, that's to say, to allow a considerable leak, so that the motorpump is not blocked when, according to the program of the fountain, all the valves need to be closed and the motorpump is on.

This system of opening and closing by means of opposing plugs has also the following advantages:
- By adding two plugs and, therefore, two orifices for the ejection of water, the distance between the magnetic mobile core and the magnetic fixed core is about one half the distance in the case of just one plug for the same water flow. This point has a lot of influence on the opening and closing speed and, as a consequence, a great response speed can be achieved even in valves allowing big water flows.
- It allows an inner design of the valve (Fig. 3) that prevents suspension particles shorter than the opening length of the valve from blocking it.

Once we have achieved the right response speed to synchronize to the time of music, in valves of small as well as of big water flows, the aesthetic effect of water explosions in different heights is achieved by using different steps or phases of opening and closing through different levels of forces achieved through different tension levels in correspondance with the system of consecutive coil springs (two in the drawing).

This way, the sequence of water effects or explosions is controlled according to the computer program.

As we can see in Fig. 2, the stopper mechanism functions as it follows: to open the valve, the electromagnet must overcome the resistance of the coil springs (Fig. 2, 1 and 2), whose reaction keeps it closed. Coil spring 1 opposes a resistance that can be overcome by the reaction of the electromagnet in the first tension level. So, this level or voltage will be unable to keep it open once cylinder 3, integrated in the movable axis as it slides, hits element 4, whose sliding opening movement is avoided by coil spring 2, whose resistance capacity is higher than that of coil 1, and can only be overcome by the electromagnet in its highest electric tension level.

Consequently, in this case, the opening becomes a sequence of two openings in a lapse of time. This lapse can be controlled by graduating the distances of separation D1 and D2 between elements 3-4 and 4-5 and by graduating different levels of forces in the electromagnet, controlled from the central informatic system. Thus, the opening and closing of the valve implies, according to the programmed sequence, not a simple cut or disappearing of the jets, but the forming water sections (which become water explosions) at different heights whose lapse times and heights can be controlled.

As we have mentioned, even if the inner design expressed in (Fig.3) avoids the blocking by particles shorter than the opening length of the valve, it could happen that lime deposits on the sliding axis (Fig. 3.1) could obstruct the sliding movement and eventually block the valve.

This difficulty is solved in some existing valves either making the axis easily accesible by disassembling some elements or by adding a handle to move the axis and unblock the valve.

However, the first solution requires a process of disassembling, cleaning and assembling, which is very hard in fountains, given that the valves are to be submersed. The second solution would not be viable for an axis sliding 5 times per second. A handle, submersed in water, with adherences and dirtiness would be an impeding obstacle to such movement.

Given that the system of coil springs (26) must be accesible from outside (to graduate both the simultaneity of jets and the lapses of time of water explosion effects) and connected with the sliding axis (1), this axis must stick out of the system of coil springs (26) in such a way that it can be reached from outside. This way, pushing or pulling the axis, eventual adherences, dirtiness or lime will be removed.

Another important problem solved by this valve, characterized by the exceptional sliding dynamism of the axis in the process of opening and closing (about five sliding movements per second), is the fact that it guarantees watertightness in the can containing the electromagnet.

In some of the valves used in fields other than ornamental musical fountains (where the lapse time between closing movements are much longer) watertightness is achieved by means of membranes and reinforcements, which, adjusted to the orifices for the sliding axis, avoid the passage of water.

But a solution of this kind is not viable in the conditions required for the working of a valve in ornamental musical fountains. First of all, given the sliding movement of the axis through the orifice, the action of a membrane would slow down its movement. On the other hand, lime adherences and other particles on the sliding axis - unavoidable in some water when the fountain has not worked for a certain period of time- would damage and destroy the membrane when the axis starts sliding.

So, in order to guarantee watertightness in the electromagnet, we must install an in-between body (17) connecting both of them and fixing the electromagnet can to the body of the valve through the bridle (18). This way, the sliding of the central axis will take place between the in-between body (17) and the body of the valve. Humidity may enter the intermediate body, but the electromagnet will be completely isolated. The central axis in the in-between body is protected against water or humidity through a sheltering system (20) consisting of an impervious flexible protection capable of following the sliding movement of the central axis to which it is hermetically fixed by a ring (23). The body or in-between cylinder (17) has orifices (16) for the drainage of water that gather there. This way we make sure there will be no pressure inside the cylinder to make the sliding of the central axis more difficult.

Now that we have explained the features of this invention, in Fig. 3 the specific operation of the valve is presented as it has been described. For a case in which we have two power levels for "two-height effects" in the aquatic elements in the stopper mechanism (electromagnet and coil springs): central axis of the valve (1); body or in-between cylinder (17); union bridle of the in-between body with the valve (15); impervious flexible protection (20); hermetically fixed ring of the flexible protection to the central axis (23); orifices for draining (16); movable magnetic core (5); fixed magnetic core (13); closing lids for the electromagnet (14); cylinder encapsulating the bobbin (9); coil (7); bobbin (8); connecting space (12); connection to the control equipment of the fountain (10); graduable system of coil springs (26) with outer axis prolongation (27).

## Claims

1. A submersible and unblockable electromagnetic valve aimed at the control of the movement of water in ornamental fountains and in spectacles of water, light and music, comprising a sliding axis (Fig 3; 1) extending from the body of the electrovalve in such a way that it may easily be handled and unblocked without disassembling the valve itself, characterized in that the process of opening takes several steps or phases, by means of an electromagnet (Fig. 3;8) that, through two or more electric tensions, overcomes the opposing force of two or more coil springs having different resistence capacities.

2. An electromagnetic valve according to claim 1, wherein the system of two or more coil springs (Fig. 3;26) producing the reactions in correspondence with the different electric tensions of the electromagnet, is adjustable from outside, without any disassemblage (Fig. 3;26) and whose sequence of opening times is controlled by adjusting the position of a graduable element of the sliding axis (Fig. 2;4) with regard to the static elements of the system (Fig. 3; 3 and 5).

3. An electromagnetic valve according to claims 1 and 2, wherein the sliding axis (Fig. 3;1) sticks out of the system of coil springs (Fig. 3;27), so that it can be handled from outside in both senses of its sliding movement.

4. An electromagnetic valve, according to claims 1 to 3, wherein the part of the axis (Fig. 3;1) that slides between the body of the valve and the can containing the electromagnet is isolated from water and humidity by means of a flexible impervious protection that permits its sliding movement in both senses (Fig. 3; 20), hermetically fixed to the sliding axis (Fig. 3; 23) and to the hole of the can containing the electromagnet, through an intermediate body (Fig. 3; 17) between the body of the valve and the can.

5. An electromagnetic valve, according to all the above claims, wherein the opening and closing system has two opposing plugs (Fig. 3;24-25) integrated on the sliding axis (Fig. 3;1) and wherein their closing position is not a complete obstacle for the passage of water.

## Patentansprüche

1. Versenkbares und unblockierbares elektromagnetisches Ventil zur Kontrolle der Bewegung von Wasser bei Springbrunnen und Wasserschauspielen mit Licht- und Musikeffekten, er gleitet solchermaßen auf Lagern (Abb. 3;1) und tritt dermaßen aus dem elektromagnetischen Ventil hervor, daß er leicht bedient und bei einer eventuellen Verstopfung leicht und schnell gereinigt werden kann, ohne daß das Ventil selbst demontiert werden muß; Charakteristisch ist, daß der Prozeß des Öffnens in verschiedenen Schritten phasen geschieht. Dies wird durh einen Elektromagneten ermöglicht (Abb. 3;8), der mit zwei oder mehr Graden elektrischer Stärke arbeitet und so die entgegengesetzte Kraft von zwei oder mehr Sprungfedern unterschiedlicher Stärke überwindet.

2. Electromagnetisches Ventil wie in Patentanspruch 1, wobei das System von zwei oder mehreren Sprungfedern (Abb. 3;26), die zusammen mit den unterschiedlichen elektrischen Spannungen des Elektromagneten die Reaktionen herleiten, von außen ohne jede Zerlegung reguliert werden kann (Abb. 3;26). Die Folge der Öffnungssequenzen wird gesteuert, indem die Position eines verstellbaren Elements der Gleitachse (Abb. 2;4) hinsichtlich der statischen Elemente des Systems (Abb. 3;3 und 5) reguliert wird.

3. Elektromagnetisches Ventil wie in den Patentansprüchen 1 und 2, wobei die Gleitachse (Abb. 3;1) aus dem Sprungfedersystem (Abb. 3;27) heraustritt, so daß sie von außen in beiden Richtungen ihrer Gleitrichtung bewegt werden kann.

4. Elektromagnetiches Ventil wie in den Patenansprüchen 1 bis 3, in dem der den Elektromagneten umschließende Behälter am Ventil befestigt ist durch einen Zwischenkörper (Abb. 3;1) mit einem flexiblen wasserundurchlässigen Schutz, der hermetisch an die zentrale Gleitachse(Abb. 3;23) den Ventils angeschlossen ist (Abb. 3;17). Dieser Körper verhindert, daß Feuchtigkeit oder Wasser aus dem Ventil in das innere des Behälters mit dem Elektromagneten eindringen.

5. Elektromagnetisches Ventil wie in den Patentansprüchen 1 bis 4, bei dem der Öffnungs- und Schließmechanismus durch zwei Deckel (Abb. 3;24-25) an der Gleitachse produziert wird (Abb. 3;1). Diese Deckel determinieren im Einklang mit der Achse durch Öffnen und Schließen den Austritt des Wassers vom Inneren des Ventils nach außen.

## Revendications

1. Vanne électromagnétique immergeable et désobstruable pour le contrôle du mouvement de l'eau des fontaines ornementales et des spectacles d'eau, de lumière et de musique, comprenant un axe glissant (Fig. 3;1) sur des coussinets qui dépasse le corps de l'électrovanne, de façon qu'elle est parfaitement accesible de l'extérieur et dont la mise en mouvement peut annuler une obstruction eventuelle sans démonter la vanne, caractérisée par un processus d'ouverture et de fermeture où l'action d'un électro-aimant (Fig. 3,8) activé à deux ou plus niveaux de tension électrique, surpasse la force d'opposition de deux ou plus resorts avec des capacités de résistance différentes.

2. Vanne électromagnétique suivant la révendication 1, caractérisée par un système de deux ou plus ressorts (Fig. 3;26) qui produit des réactions en correspondance avec les tensions électriques différentes de l'éctro-aimant, qu'on peut régler de l'exterieur, sans rien démonter (Fig. 3; 26) et dont la séquence de temps d'overture est contôlée en réglant la position d'un élément réglable de l'axe glissant (Fig. 2;4) par rapport aux éléments statiques du système (Fig. 3; 3 et 5).

3. Vanne électromagnétique suivant les révendicationes 1 et 2, caractérisée par un axe glissant (Fig. 3;1) qui dépasse le système de ressorts (Fig. 3;27), d'une telle façon qu'on peut le faire bouger de l'extérieur dans les deux sens de son mouvement glissant.

4. Vanne électromagnétique suivant les revendicatios antérieures, caractérisée par la partie de l'axe (Fig. 3;1) glissant entre le corps de la vanne et la boîte qui contient l'éctro-aimant est isolée de l'eau et de l'humidité grâce à une protection imperméable et flexible qui permet le mouvement glissant dans les deux sens (Fig. 3;20), hermétiquement fixée à l'axe glissant (Fig. 3;23) et au trou de la boîte qui contient l'électro-aimant, à travers un corps intermédiaire (fig. 3;17) entre le corps de la vanne et la boîte.

5. Vanne électromagnétique suivant les révendications antérieures, caractérisée par un système d'ouverture et de fermeture avec deux bouchons opposés (Fig. 3;24-25), situés sur l'axe glissant (Fig. 3;1) et dont la position de fermeture n'est pas un obstacle complet pour le passage de l'eau.
